# EUROPÄISCHE PATENTSCHRIFT

(11) **EP 1 266 543 B1**
(45) Veröffentlichungstag und Bekanntmachung des Hinweises auf die Patenterteilung: **11.01.2006**
(21) Anmeldenummer: 01903773.8
(22) Anmeldetag: 15.02.2001
(51) Int. Cl.: H05B 3/74

(54) **KOCHFELD**
COOK-TOP
PLAQUE DE CUISSON

(30) Priorität: 23.03.2000 DE 10014373
(43) Veröffentlichungstag der Anmeldung: 18.12.2002
(73) Patentinhaber: Schott AG, 55122 Mainz (DE)
(72) Erfinder: KRAUSE, Cora, 76879 Essingen (DE); COTLEAR DE WITZMANN, Monica, 55268 Nieder-Olm (DE); PETTO, Daniela, 55252 Mainz (DE); SCHULTHEIS, Bernd, 55270 Schwabenheim (DE); BOOSS, Claudia, 67806 Katzenbach (DE); SAAR, Ella, 55120 Mainz-Mombach (DE)
(74) Vertreter: Fuchs Mehler Weiss & Fritzsche
(86) Internationale Anmeldenummer: PCT/EP2001/001678
(87) Internationale Veröffentlichungsnummer: WO 2001/072087

(56) Entgegenhaltungen:
- EP-A- 0 716 270
- DE-U- 29 902 875

## Beschreibung

Die Erfindung bezieht sich auf ein Kochfeld mit einer transparenten, nicht eingefärbten Glaskeramikplatte oder alternativ mit einer Glasplatte aus vorgespanntem Spezialglas als Kochfläche, die mit Strahlungsheizelementen beheizte Kochzonen aufweist, an der Dekore angebracht sind und deren Unterseite eine IR-durchlässige Schicht aus einer temperaturbeständigen Farbe trägt.

Kochfelder mit einer Glaskeramikplatte als Kochfläche sind gängiger Stand der Technik. Sie weisen typischerweise, wie aus der EP 0 220 333 hervorgeht, eine Glaskeramikplatte auf, die mit farbgebenden Ionen zur Verringerung der Transmission eingefärbt ist, damit die unterhalb der Glaskeramikplatte untergebrachten Funktions-Komponenten des Kochfeldes praktisch von oben nicht einsehbar sind. Diese Kochflächen sind daher praktisch nicht transparent und erscheinen in Aufsicht schwarz.

Aus vorgenannten Glaskeramikplatten gebildete Kochflächen sind im allgemeinen mit Dekoren versehen, sei es aus rein ästhetischen Gründen oder um Funktionsbereiche, wie z.B. die Kochzonen, gegenüber anderen Bereichen der Kochfläche, abzugrenzen. Diese Dekore und deren Aufbringung auf die Glaskeramikplatte werden beispielsweise in der DE 44 26 234 C 1 (= EP 0 693 464 B 1) und der DE 34 33 880 C 2 beschrieben.

Wegen der Nichttransparenz der eingefärbten Glaskeramikplatte werden daher die Dekore an der Kochfläche, einschließlich der sogenannten, beispielsweise aus der DE 197 28 881 C 1 (= DE 297 11 916.8 U 1) bekannten vollflächendekorierten Kochflächen, bei denen das Dekor nahezu vollständig die Oberseite der Kochfläche abdeckt, gemäß dem o.a. Stand der Technik mit keramischen Farben auf Emaillebasis auf der Oberseite, entweder typischerweise mittels Siebdruck aufgedruckt, oder dort nach der Abziehbild-Technik aufgebracht und anschließend eingebrannt.

Nachteilig bei diesen bekannten Kochfeldern mit dekorierten Glaskeramikplatten ist, daß die keramischen Dekorfarben nur in einer relativ dünnen Schicht von nur einigen µm aufbringbar sind und in dieser Schichtstärke nicht die gewünschte Brillanz aufweisen. Weiterhin ist aufgrund von drucktechnisch bedingten Schwierigkeiten, insbesondere bei den vollflächen-dekorierten Kochflächen, die Dekorgestaltung und damit das Erscheinungsbild der Kochflächen nicht restriktionsfrei. Zudem können nur bestimmte Dekorfarben zum Einsatz kommen, die den Anforderungen aus der Praxis (Verschieben von Töpfen, Reinigung von übergelaufenem und eingebranntem Kochgut etc.) genügen, da die auf der Oberseite aufgebrachten Dekore hohen mechanischen und chemischen Angriffen ausgesetzt sind, wie es beispielsweise in der DE 36 00 105 C2 beschrieben ist.

Ferner stehen die auf die Oberseite der Glaskeramikplatte aufgebrachten Dekore einer möglichst glatten Kochfläche hindernd im Wege.

Weiterhin sind sogenannte Glas-Hoptops bekannt, bei denen Platten aus vorgespanntem Kalknatronglas vorgesehen sind, die unterseitig mit organischen Farben dekoriert sind, und Bohrungen zur Aufnahme von atmosphärischen Gasbrennern aufweisen. Die organischen Farben besitzen eine relativ niedrige Temperaturbeständigkeit, was bei den Glas-Hoptops ausreicht, da sie in kalten Bereichen eingesetzt werden. Bei Kochflächen mit Glaskeramikplatten und strahlungsbeheizten Kochzonen liegen die Temperaturen jedoch weit höher, so daß die bekannte Technik insoweit nicht anwendbar ist.

Darüber hinaus sind induktionsbeheizte Kochflächen mit transparenten Glaskeramikplatten bekannt, die aufgrund der dort auftretenden niedrigen Temperaturen lediglich eine organische, die Nichttransparenz gewährleistende dekorierte Unterseitenbeschichtung aufweisen, aber im Bereich der Kochzonen undekoriert sind.

Durch die JP 7-17409 und JP 51-89517 ist es bekannt, als Kochflächen dienende Glaskeramikplatten aus einer transparenten, nicht eingefärbten Glaskeramik herzustellen und deren Unterseite mit einer temperaturbeständigen Farbe zu bedrucken. Diese Farbschicht dient jedoch allein der Herstellung der Nichttransparenz, sie ersetzt lediglich die sonst übliche Einfärbung, damit sie in Aufsicht ebenfalls schwarz erscheint. Die Dekore werden im bekannten Fall ebenfalls auf der Oberseite aufgebracht, mit den entsprechenden, eingangs dargestellten Nachteilen.

Aus DE 299 02 875 U1 ist ein Kochfeld bekannt, wobei die Unterseite einer Glaskeramikplatte direkt eine Deckschicht mit entsprechend der gewünschten Struktur der Kochzonenanzeige transparenten Bereichen trägt.

Der Erfindung liegt die Aufgabe zugrunde, bei Kochflächen, die durch Glaskeramikplatten oder Glasplatten aus vorgespanntem Spezialglas gebildet werden, die Brillianz der Dekore zu erhöhen, und eine möglichst glatte Kochfläche zu erzielen.

Die Lösung dieser Aufgabe gelingt ausgehend von einem Kochfeld mit einer transparenten, nicht eingefärbten Glaskeramikplatte oder einer Glasplatte aus vorgespanntem Spezialglas als Kochfläche, die mit Strahlungsheizelementen beheizte Kochzonen aufweist, an der Dekore aufgebracht sind, und deren Unterseite eine IR-durchlässige Schicht aus einer temperaturbeständigen Farbe trägt gemäß der Erfindung dadurch, daß die unterseitige Schicht als farbgebende Dekorierung ausgebildet ist und die Oberseite der Glaskeramik - oder Glasplatte dekorfrei ist.

Die erfindungemäß ausgebildeten Dekore weisen in der Aufsicht eine sehr hohe Brillianz auf, vergleichbar mit einer Hinterglasmalerei. Da die Dekore auf der Unterseite der Glas- oder Glaskeramikplatte aufgebracht sind, ist daher die die Kochfläche bildende Oberseite der Platte sehr glatt und daher im erhöhten Maße reinigungs- und bedienungsfreundlicher. Die Farbenauswahl ist zudem nicht mehr durch mechanische und reinigungsbedingte Forderungen beschränkt, da die Unterseite der Glas- oder Glaskeramikplatte nicht einem Verkratzen durch verschobenes Kochgeschirr und Reinigungsmitteln bzw. überlaufendem Kochgut ausgesetzt ist. Wegen der Freiheit von den Zwängen der Kochfläche sind ferner neue Gestaltungsmöglichkeiten gegeben.

Gemäß einer Ausgestaltung der Erfindung sind die temperaturbeständigen Farben aufgedruckt und eingebrannt. Diese Methode des Bedruckens erlaubt gegenüber anderen Methode des Farbauftrages eine einfache und damit wirtschaftliche Herstellung der mit Dekore versehenen Glas- oder Glaskeramikplatte, wobei im Fall der Glaskeramikplatten die typische Noppenstruktur den Farbauftrag erschwert.

Als temperaturbeständige Farben kommen gemäß der Weiterbildung der Erfindung Farben in Frage, die auf in organischen Lösungsmitteln gelösten Metall- und/oder Edelmetallverbindungen beruhen und/oder kolloidale Metalle enthalten, sogenannte Lüsterfarben, Edelmetallresinate oder allgemein "organometallische" Farben, sowie organometallische Farben, die zusätzlich beliebig pigmentiert sein können, sowie Farben mit einer Matrix auf Sol-Gel-Basis, die entweder eine charakteristische Eigenfärbung aufweisen und/oder zusätzlich beliebig pigmentiert sein können, wobei im Heißbereich vorzugsweise konventionelle, anorganische Pigmente oder Lüster-, Perlglanz-Interferenzpigmente oder beliebige Mischungen dieser Pigmente verwendet werden können.

Für den Kaltbereich kommen ebenfalls die oben genannten organometallischen Farben, Lüsterfarben, Edelmetallresinate, und/oder zusätzlich beliebig pigmentierte organometallische Farben, Lüsterfarben. Edelmetallresinate in Frage, und/oder organische Farben, Farblacke, Farben auf Basis organisch modifizierter Gläser und/oder Farben, die aus einer organischen Bindematrix oder Matrix auf Sol-Gel-Basis bestehen und konventionelle, organische Farbstoffe oder anorganische Pigmente, Lüster-, Metalleffekt-, Perlglanz- oder Interferenzpigmente oder verschiedene Mischungen dieser Pigmente enthalten. Die erstgenannten "organometallischen" Farben und Farben auf Basis einer Sol-Gel-Matrix weisen die notwendige Temperaturbeständigkeit auf, um auch der direkten Bestrahlung durch die die Kochzonen beheizenden Strahlungselementen dauerhaft widerstehen zu können.

Die vorgenannten Farben werden, je nach Farbtyp, bei verschiedenen Temperaturen eingebrannt.

Die sonst üblichen keramischen Farben können bei den unterseitig beschichteten Glaskermikplatten nicht eingesetzt werden, da ein Einbrand die mechanische Festigkeit der Glaskeramikplatte erheblich reduzieren würde, so daß beispielsweise Stoßbelastungen, wie sie in der Praxis vorkommen können, zu einer Beschädigung der Glaskeramikplatte führen würden.

Gemäß einer Ausgestaltung der Erfindung sind zur Erzielung besonderer Farbeffekte in einigen Fällen aus dem vorgenannten organometallischen Lösungen mit Metall- und/oder Edelmetallanteilen als Farben gebildete Dekore, die in der Regel deckend genug sind mit organischen Farben oder Farben, die aus einer organischen, vorzugsweise polymeren Bindematrix oder Matrix auf Sol-Gel-Basis bestehen und konventionelle, anorganische Pigmente, Lüster-, Metalleffekt-, Perglanz- oder Interferenz-Pigmente oder verschiedene Mischungen dieser Pigmente enthalten, hinterlegt.

Je nach erforderlicher Temperaturbeständigkeit, d.h. abhängig davon, ob die Dekore in der beheizten Zone oder im Kaltbereich der Kochfläche aufgebracht ist, werden gemäß einer weiteren Ausgestaltung der Erfindung Kombinationen aus verschiedenen Farben verwendet. Denn grundsätzlich kann jede der o. g. Farben einzeln oder - soweit Verträglichkeit gegeben ist - in Kombination mit jeder anderen der o. g. Farben verwendet werden, wobei die Temperaturbeständigkeit der einzelnen Farbtypen, der Grad der Transparenz der Farbschichten und die gewünschten Farbeindrücke den Anwendungsbereich und die Farbkombinationen beeinflussen.

Die aus organometallischen Lösungen mit Metall- und/oder Edelmetallanteilen gebildeten Farben können auch selbst zur Erzeugung neuer Effekte mit konventionellen, anorganischen Pigmenten, Lüster-, Metalleffekt-, Perglanz- oder Interferenz-Pigmenten oder verschiedenen Mischungen dieser Pigmente versetzt werden und bei Bedarf mit organischen Farben, Farblacken, Farben auf Basis organisch modifizierter Gläser und/oder Farben, die aus einer organischen, vorzugsweise polymeren Bindematrix oder Matrix auf Sol-Gel-Basis bestehen und beliebig pigmentiert sind, hinterdruckt werden.

Des weiteren sind Kombinationen von transparenten Lüsterfarben mit Edelmetallfarben als Unterdruckung, insbesondere im Kaltbereich denkbar.

Je nach erforderlicher Temperaturbeständigkeit, d.h. abhängig davon, ob es sich um die beheizte Zone oder den Kaltbereich der Kochfläche handelt, werden nur die vorgenannten "organometallischen" Farben oder eine Kombination aus diesen Farben mit einer organischen Farbe, einem Farblack, einer Farbe auf Basis organisch modifizierter Gläser oder mit Farben, die aus einer organischen, vorzugsweise polymeren Bindematrix oder einer Matrix auf Sol-Gel-Basis bestehen und konventionelle, anorganische Pigmente, Lüster-, Metalleffekt-, Perlglanz- oder Interferenz-Pigmente oder verschiedene Mischungen dieser Pigmente enthalten, verwendet.

Gemäß einer Weiterbildung der Erfindung sind Dekore durch einen Mehrfachdruck mehrlagig aufgebracht. Dadurch kann mit Vorteil, je nach Anzahl der Drucklagen beim mehrmaligen Drucken, der Transmissionsgrad eingestellt werden, wodurch sich insbesondere besondere Funktionsbereiche, wie Displayfenster, auf der Kochfläche darstellen lassen. Weiterhin lassen sich auf diese Weise auch Metallic-Effekte erzielen, die insbesondere im Hinblick auf die Kombinationsmöglichkeiten mit Edelstahl von Kundsenseite gewünscht sind.

Gemäß einer anderen Weiterbildung der Erfindung ist das Kochfeld so ausgebildet, daß im Kaltbereich der Glas- oder Glaskeramikplatte eine laminierte Folie, z.B. eine dünne Aluminiumfolie oder eine temperaturbeständige Polyester- oder Melaminharzfolie, mit hochtransparenten Klebern und lediglich in den Kochzonen-Heißbereichen eine Farbschicht aus den temperaturbeständigen Farben aufgebracht, insbesondere eine einlagige oder mehrlagige Edelmetall- und/oder Lüsterfarbschicht, wobei letztere aufgrund höherer IR-Transparenz bevorzugt wird. Auf der laminierten Folie können dabei Dekore aufgebracht werden.

Gemäß einer weiteren Ausgestaltung der Erfindung sind im Bereich der Kochzonen dunkle, deckende Farben aufgebracht, so daß lediglich bei eingeschalteten Heizelementen eine Durchsicht auf die Heizelemente möglich ist, und diese daher bei ausgeschaltetem Kochfeld nicht dessen Aussehen nachteilig beeinflussen können.

Weitere Ausgestaltungen der Erfindung ergeben sich aus der Beschreibung von zwei in den Zeichnungen dargestellten Ausführungsformen, die auch die Erfindung näher erläutert.

Es zeigen:
- Fig. 1: in einer schematisierten Schnitt-Darstellung einen Ausschnitt aus einem Kochfeld mit einer transparenten, nicht eingefärbten Glaskeramikplatte, die an der Unterseite Beschichtungen aus temperaturbeständigen, nicht keramischen Farben zum Erzeugen von Dekors und/oder Zeichen aufweist, und
- Fig. 2: in einer schematisierten Schnitt-Darstellung analog Fig. 1 eine entsprechende Glaskeramikplatte, die nur in den Kochzonen und einem Übergangsbereich die Farbschichten besitzt und im Kaltbereich mit einer dünnen Aluminiumfolie beklebt ist, und
- Fig. 3: in vier Figurenteilen A - D verschiedene Kombinationen von Farbschichten.

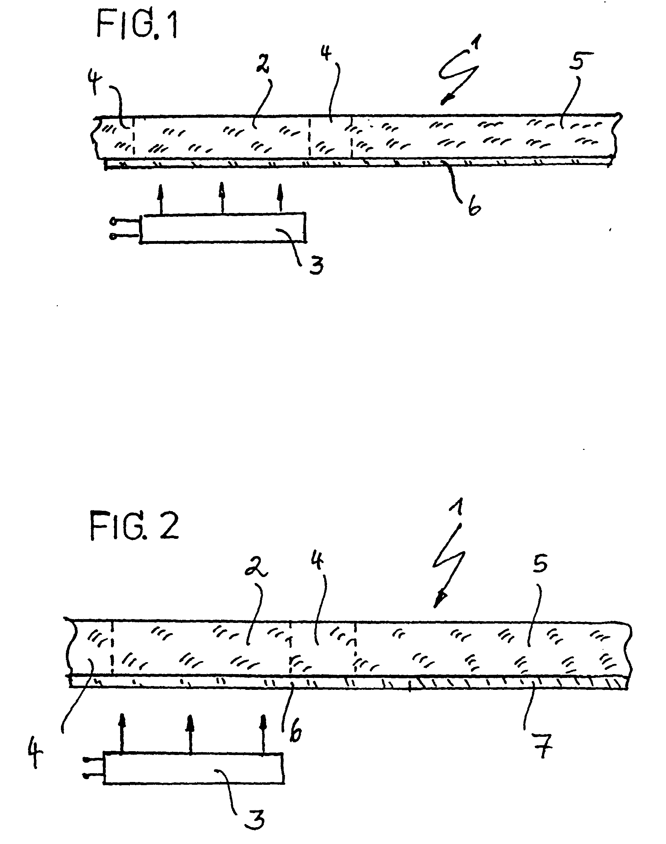

Die Fig. 1 zeigt in einer schematisierten Schnitt-Darstellung einen Ausschnitt aus einem Kochfeld mit einer transparenten, nicht eingefärbten Glaskeramikplatte 1 als Kochfläche.

Diese Glaskeramikplatte 1 weist mindestens eine gestrichelt angedeutete Kochzone 2, den Heißbereich, auf, dem ein elektrisch betriebenes Strahlungs-Heizelement 3 zugeordnet ist. Der Heißbereich 2 besitzt typischerweise eine Temperatur von > ca. 350° C. Er ist umgeben von einer gestrichelt angedeuteten ringförmigen Übergangszone 4 mit einer Stärke von 0 - 25 mm und dem Kaltbereich 5, in dem die Temperatur in der Regel unterhalb von 220° C liegt.

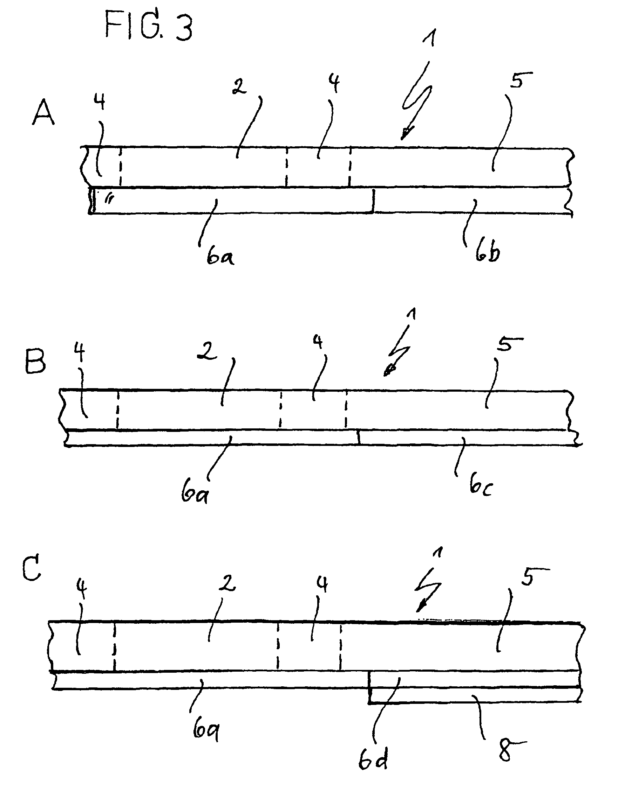

Auf der Unterseite der transparenten Glaskeramikplatte 1 sind erfindungsgemäß Dekore aus temperaturbeständigen Farben in unterschiedlichen Anordnungen aufgebracht, was zunächst pauschal und symbolisch in Fig. 1 durch die Schicht 6 dargestellt ist, und für die in den Figurenteilen der Fig. 3 Beispiele gegeben werden. Diese Schicht 6, die auch mehrlagig ausgebildet sein kann, besteht aus den vorbeschriebenen Farben bzw. Farbkombinationen, die eine je nach dem Bereich der Platte, auf dem sie aufgebracht sind, angepaßte hohe Temperaturbeständigkeit besitzen und deren Aufbringen auf die Plattenunterseite durch Aufdrucken erfolgt.

Bei den vorbeschriebenen, aus organometallischen Lösungen mit Metall und/oder Edelmetall gebildeten Farben handelt es sich um filmbildende Farben, die ein oder mehrere Edelmetalle - insbesondere Platin, Palladium, Gold und Silber - sowie weitere metallische Verbindungen, gelöst in organischen Lösungsmitteln, und/oder Metalle kolloidal enthalten, und denen Substanzen wie Harze, Cosolventien, und/oder beliebige Additive zugesetzt sind, welche die Farbe, Farbintensität, Adhäsion oder Löslichkeit der Lüsterfarben beeinflussen. Hersteller derartiger Farben sind z.B. Heraeus, Johnson Matthey, Cerdec. Diese Farben zeichnen sich aus durch hohe Farbintensität bei geringer Schichtdicke und beeinträchtigen somit die Festigkeit der Kochflächen nur geringfügig. Die Temperaturbeständigkeit liegt je nach Farbe zwischen 500 und 950° C im Dauerbetrieb und kann beim temperaturbeständigeren Farben kurzzeitig bis zu 1000° C betragen.

Vorzugsweise werden im beheizten Bereich der Kochfläche, der Kochzone 2, dunklere, deckendere und bei hohen Temperaturen beständige Farben dieser Art verwendet, die lediglich im eingeschalteten Zustand die Durchsicht auf die Heizelemente erlauben. Durch zweimaliges oder mehrmaliges Drucken kann die Transmission im sichtbaren Spektralbereich weiter reduziert werden. Die Infrarot-Transmission liegt beim Einfach-Druck - je nach Art der Glaskeramik und des verwendeten Drucksiebes -, typischerweise zwischen 60 - 85 %, was zur Wärmeübertragung beim Kochen, insbesondere bei Verwendung von schlechtem Geschirr, beiträgt. Unterstützt wird dieser Effekt dadurch, daß das Material der Glaskeramikplatte 1 bereits selbst eine sehr hohe IR-Transparenz besitzt. Der Einbrand erfolgt entweder im Primärbrand, während der sogenannten Keramisierung, wie es in der DE 35 05 922 C1 beschrieben ist, oder in einem speziellen Sekundärbrand bei typ. 200° C bis 900° C, vorzugsweise bei ca. 460 bis 650° C für weniger temperaturbeständige Farben für ca. 5 bis 60 min, bzw. bei ca. 460° C - 900° C für temperaturbeständigere Farben, ebenfalls für ca. 5 - 60 min. Weiterhin verwendbar sind die vorg. "organometallischen" Farben auch im Übergangsbereich 4 und im Kaltbereich 5 der Kochfläche, d.h. außerhalb der Kochzone 2, wo die Temperaturbelastung von ca. 350° C am Rand der Kochzone bis ca. Raumtemperatur am Außenrand der Kochfläche abfällt.

Hier werden vor allem "organometallische", insbesondere Lüsterfarben verwendet, die eine geringere Temperaturbeständigkeit aufweisen und von denen ein breiteres Farbspektrum - wie z.B. auch Gold, Rot, Grün, lau, verschiedene Grautöne etc. - zur Verfügung steht.

Zur farbigen Unterscheidung wird in bevorzugter Ausführungsform eine andere, z.B. hellere "organometallische" Farbe verwendet, die ggf. mit einer Deckschicht hinterdruckt ist. Die Deckschicht ist in einem Fall eine organische Farbe. Die Temperaturbeständigkeit beträgt bei diesem Farbtyp üblicherweise max. 180 bis 300° C. Dies führt dazu, daß zwischen der Kochzone und der organischen Deckschicht ein Zwischenraum von ca. 0 bis 25 mm ausgespart werden muß, der in Verbindung mit dem üblicherweise hellen Isolationsring der Heizelemente 3 als zusätzliches gestalterisches Designelement zur Kennzeichnung der Kochzone, der Kochzonenmarkierung, herangezogen wird, und sowohl unbedruckt als auch mit einer temperaturbeständigeren Farbe bedruckt sein kann.

Bei Verwendung von z.B. Farben, die anorganische Pigmente, Lüster-, Perlglanz-, Metalleffekt- oder Interferenz-Pigmente oder Mischungen verschiedener Pigmente enthalten, und die sich durch metallischen Glanz auszeichnen, kann aufgrund der gegenüber den rein organischen Farben deutlich höheren Temperaturbeständigkeit von ca. 500 bis 650° C auf die oben erwähnte Aussparung verzichtet werden.

O. g. Farben lassen sich im Kaltbereich sowohl in Verbindung mit den "organometallischen" Farben verwenden, als auch alleine einsetzen.

Je nach verwendeter Deckfarbe werden in Verbindung mit den verschiedenen "organometallischen" Farben unterschiedliche Farbeffekte erzielt.

Weitere Möglichkeiten der Farbgestaltung ergeben sich durch einen Zusatz von sogenannten Effektpigmenten. Bei den Effektpigmenten handelt es sich um Lüster-, Perglanz- oder Interferenz-Pigmente, die im Gegensatz zu konventionellen Pigmenten, Schichten mit unterschiedlichen Brechungsindices besitzen und somit Licht nicht absorbieren und streuen, sondern in Abhängigkeit des Schichtaufbaus mehr oder weniger stark reflektieren und transmittieren, sowie um Metalleffekt-Pigmente, wie z.B. Aluminiumflakes, die wie ein Spiegel das Licht gerichtet reflektieren. Hersteller sind z.B. E. Merck, Darmstadt, BASF, Ludwigshafen - beide Deutschland - sowie Mearl Corp., N.Y. USA, Karrira OY, Porl Finnland, Tayca, Osaka, Japan.

Es hat sich gezeigt, daß durch Zusatz von 0 bis 20 Gew.-% Effektpigmenten - auch in ansonsten relativ dunklen - Lüsterfarben der Metallic-Effekt deutlich hervorheben läßt. Andererseits zeigte ein zu hoher Anteil an Effektpigmenten (> 20 Gew.-%) eine Verschlechterung der Hafteigenschaften, so daß der bevorzugte Bereich zwischen 0,1 und 10 % liegt.

In bevorzugter Ausführungsform wird in Verbindung mit einer mittelgrauen Lüsterfarbe bei Verwendung einer silbrigfarbigen Deckschicht im Kaltbereich ein Edelstahl-Effekt erzielt. Durch die üblicherweise geringfügige bräunlichgelbe Eigenfärbung der Glaskeramikplatte bekommt diese Farbkombination einen rauchglas-ähnlichen Farbausdruck.

Weitere Gestaltungsmöglichkeiten ergeben sich durch Verwendung von bunten organischen Farben im Kaltbereich. Je nach Deckkraft der Farben kann eine zusätzliche Deckschicht erforderlich werden.

Als Glaskeramikplatten kommen sowohl solche mit rückseitiger NoppenStruktur als auch beidseitig glatte Platten zum Einsatz. Erstere besitzen im allgemeinen eine höhere mechanische Festigkeit. Die beidseitig glatten Platten besitzen aber den Vorteil, daß Anzeigeelemente, wie LED-LCD-Anzeigen, ohne zusätzliche Immersionsschichten gut lesbar erscheinen.

Durch die Anzahl der Schichten läßt sich im Bereich von Funktionszonen, wie z.B. Displayfenstern, die Transparenz gezielt einstellen.

Bei Verwendung von nahezu farbneutralen Lüsterfarben, z.B. anthrazit, lassen sich auch verschieden farbige Anzeigen realisieren, was insbesondere bei den eingefärbten Glaskeramik-Kochflächen schwierig ist, da dort nur Rot-Farbtöne möglich sind.

In den vier Figurenteilen A - D der Fig. 3 sind verschiedene Möglichkeiten der Kombination von Farbschichten in den einzelnen Temperaturbereichen der Glaskeramikplatte 1 dargestellt. Es zeigen:
- Der Figurenteil A eine Kombination einer Schicht 6 a aus einer temperaturbeständigen Lüsterfarbe im Heißbereich 2 mit einer Schicht 6 b aus einer anderen Lüsterfarbe, die auch eine geringere Temperaturbeständigkeit haben kann, im Kaltbereich 5.
- Der Figurenteil B eine Kombination einer Schicht 6 a aus einer temperaturbeständigen Lüsterfarbe im Heißbereich 2 mit einer Schicht 6c im Kaltbereich 5, die durch eine Farbe mit Effektpigmenten, die bis mindestens 350° C temperaturbeständig ist, gebildet ist.
- Der Figurenteil C eine Kombination einer Schicht 6 a aus einer temperaturbeständigen Lüsterfarbe im Heißbereich 2 mit einer Schicht 6d aus einer anderen Lüsterfarbe, die auch transparenter sein kann, im Kaltbereich 5, und die teilweise mit einer organischen Farbschicht oder Deckschicht 8 hinterdruckt ist.
- Der Figurenteil D eine Kombination einer Schicht 6 a aus einer temperaturbeständigen Lüsterfarbe im Heißbereich 2 mit einer Schicht 6 e aus einer anderen temperaturbeständigen Lüsterfarbe im Übergangsbereich 4 und im Kaltbereich 5, und die teilweise mit einer Farbschicht 9 hinterdruckt ist, die z. B. Metalleffektpigmente enthält.

In Fig. 2 ist eine weitere Ausführungsform mit einer laminierten Folie, z.B. einer Aluminiumfolie 7 im Kaltbereich 5 anstelle einer Farbschicht gezeigt. Die Aluminiumfolie ist dabei mit transparenten temperaturbeständigen Klebern auf die Unterseite der Glaskeramikplatte 1 geklebt. Als Kleber kommen beispielsweise zum Einsatz: Acrylatklebeschichten, z.B. von der Fa. 3M, UVaushärtende Kleber, oder hochtransparente Silikonkleber, bevorzugt 2K-Systeme. Bei der Laminierung muß auf einen blasenfreien Auftrag geachtet werden. Die Kleberschichten müssen dabei ggf. die Noppenstruktur (typ. 50 bis 150 µm hoch) ausgleichen, wodurch sich eine Mindestschichtstärke von 150 µm ergibt. Weiterhin ist bei der Auswahl der Kleber auf eine ausreichend hohe Wasserdampfbeständigkeit zu achten, da während des Aufheizens aus dem Isolationsring der Heizelemente 3 Wasserdampf abgegeben wird. Der Heißbereich 2 und der Übergangsbereich 4 sind, wie in Fig. 1, mit der Farbschicht 6 versehen.

Unbeschadet der Tatsache, daß die Dekore auf der Unterseite der Glas-/Glaskeramikplatte 1 angebracht sind, können auf der Platten-Oberseite zusätzlich Zeichen bzw. Symbole aufgebracht sein.

Vorzugsweise werden jedoch die notwendigen Markierungen, insbesondere die Kochzonenmarkierung, plattenunterseitig ausgebildet, z.B. durch Lücken zwischen Dekoren, oder durch aneinander grenzende, unterschiedlich eingefärbte Dekore.

Anstelle einer Glaskeramikplatte 1 kann die Kochfläche auch durch eine Glasplatte aus vorgespanntem Spezialglas, z.B. Lithiumalumosilicatglas (LAS-Glas) oder Borosilikatglas, gebildet werden.

### Beschichtungsmittel:

1. Für den Heißbereich:
   a: Lüsterfarben von Heraeus, D. Johnson Matthey, NL
   b: Lüsterfarben, die konventionelle anorganische Pigmente, Lüster-Metalleffekt-, Perlglanz-, oder Interferenz-Pigmenten oder verschiedenste Mischungen dieser Pigmente enthalten
   c: Sol-Gel-Schichten oder pigmentierte Sol-Gel-Schichten, die konventionelle anorganische Pigmente. Lüster-, Metalleffekt-. Perlglanz-, oder Interferenz-Pigmenten oder verschiedenste Mischungen dieser Pigmente enthalten
   d: Edelmetallfarben, -resinate oder andere Farben, die auf Grund einer geringen IR-Transparenz stark aufgerastert gedruckt werden
2. Für den Kaltbereich:
   - **Mindestens bis 350° C,** d.h. in direkten Anschluß an den Heißbereich druckbar (ohne Spalt)
      z.B.:
      a: Antikorrosionsfarben mit Metallpigmenten, wie z.B. Aluminiumflakes
      b: Lüsterfarben mit Temperaturstabilität bis zu 500° C, z.B. von Heraeus, D.; Johnson Matthey, NL.
      c: Lüsterfarben mit Temperaturstabilität bis zu 500° C, die konventionelle anorganische Pigmente, Lüster-, Metalleffekt-, Perlglanz-, oder Interferenz-Pigmenten oder verschiedenste Mischungen dieser Pigmente enthalten
      d: Edelmetallfarben, -resinate mit Temperaturstabilität bis zu 900° C, z.B. von Johnson Matthey, Heraeus, D. , Cerdec
      e: Sol-Gel-Schichten oder pigmentierte Sol-Gel-Schichten, die konventionelle anorganische Pigmente, Lüster-, Metalleffekt-, Perlglanz-, oder Interferenz-Pigmenten oder verschiedenste Mischungen dieser Pigmente enthalten.
   - **Bis 300° C:**
      f: organische Farben mit anorganischen Farbstoffen z.B.: Farblacke oder Hydroglasuren von der Firma Diegel, Alsfeld, D.
   - **Bis 180° C - 220° C:**
      g: organische Farben mit organischen Farbstoffen, z.B. von Heraeus. D.
      h: Farben auf Basis organisch modifizierter Gläser
      i: auflaminierte Folien, z.B. Aluminiumfolien, Polyesterfolien, Melaminharzfolien
         - Desweiteren alle denkbaren Kombinationen aus den in 1 und 2 genannten Beschichtungsmitteln, z.B. im Kaltbereich 2b+2f, 2c+2f, 2b+2a, 2b+2d, 2b+2e etc.

Je nach Beschichtungstyp wird bei unterschiedlichen Temperaturen eingebrannt/getrocknet/gehärtet

### Gestaltungsmittel:

1. **Beispiele für den Heißbereich:**
   Bei 2-Ring-Kochzonen (klein/groß oder rund/breiter Bräter) zwischen den beiden Teilflächen der Kochzonen:
   - keine Dekorierung: Konstrast durch stark durchscheinendes Heizelement im angeschalteten Zustand
   - oder eine Kombination mit geringerem Farbkontrast von z.B. einer Farbe 1a auf den Flächen mit einer Farbe 1b auf den Kochzonenringen:
   - oder eine Kombination mit stärkerem Farbkontrast von z.B. einer Farbe 1c auf den Flächen mit Farben 1a oder 1b auf den Kochzonenringen;
   - aufgerasterte Farbe, z.B. 1d im Heißbereich ggf. mit la kombiniert.
2. **Beispiele für den Kaltbereich:**
   - transparente Lüsterfarben aus 1a, 1b, 2b, 2c mit silbrigem Unterdruck, so daß ein zarter Farbschleier über einem metallisch deckenden Untergrund erscheint
   - fleckenartig aufgedruckte Lüsterfarben verschiedenster Färbung mit einem z.B. weißen oder grauen Unterdruck zur Simulierung von Gesteinstrukturen
   - nur auf die Noppenspitzen gedruckte, z. B. schwarze Lüsterfarbe mit einem vollflächigen Unterdruck in einer kräftigen organischen Farbe, z.B. grasgrün
   - Kombination von deckenderen und transparenten Lüsterfarben nebeneinander, um Blickfenster auf bestimmte Bauteile im Kochfeldsystem zum ermöglichen,
   - bedruckte oder unbedruckte Folienlaminate im Kaltbereich.

## Patentansprüche

1. Kochfeld mit einer transparenten, nicht eingefärbten Glaskeramikplatte (1) oder Glasplatte aus vorgespanntem Spezialglas als Kochfläche, die mit Strahlungsheizelementen (3) beheizte Kochzonen (2) aufweist, an der großflächige, farbige Dekore aufgebracht sind und deren Unterseite durchgehend eine IR-durchlässige Schicht (6) trägt, **dadurch gekennzeichnet, daß** die unterseitige Schicht (6) zugleich als farbgebende Dekorierung (6) ausgebildet ist und die Oberseite der Glaskeramik- oder Glasplatte (1) dekorfrei ist.

2. Kochfeld nach Anspruch 1, **dadurch gekennzeichnet, daß** die unterseitige Schicht (6)
- im Bereich der Kochzonen (2) (Heißbereich) aus einem Material besteht, das bei Temperaturen größer als ca. 350° C. typischerweise größer als 500° C, beständig ist, und
- im Bereich der Kochfläche außerhalb der Kochzonen (2) (Kaltbereich) aus einem Material besteht, das bei Temperaturen unterhalb von ca. 350° C beständig ist.

3. Kochfeld nach Anspruch 1 oder 2, **dadurch gekennzeichnet, daß** die unterseitige Schicht (6) zumindest im Heißbereich aus Farben, bestehend aus organometallischen Lösungen mit komplexierten und/oder kolloidalen Metall- und/oder Edelmetallanteilen (Lüsterfarben. Edelmetallresinate), die optional Pigmente oder Mischungen von Pigmenten enthalten, aufgebaut ist.

4. Kochfeld nach Anspruch 1 oder 2, **dadurch gekennzeichnet, daß** die unterseitige Schicht (6) zumindest im Heißbereich aus Sol-Gel-Schichten, die optional Pigmente oder Mischungen von Pigmenten enthalten, besteht.

5. Kochfeld nach einem der Ansprüche 2 bis 4, **dadurch gekennzeichnet, daß** im Kaltbereich (5) und/oder im Übergangsbereich (4), in dem Temperaturen bis ca. 350° C erreicht werden, die unterseitige Schicht (6) aus Lüsterfarben, ggf. pigmentiert oder anderen organometallischen Farben, insbesondere Edelmetallresinate, Antikorrosivfarben, ggf. pigmentiert oder Sol-Gel-Schichten, ggf. pigmentiert, die mindestens bis zu dieser Temperatur beständig sind, besteht.

6. Kochfeld nach einem der Ansprüche 2 bis 4, **dadurch gekennzeichnet, daß** im Kaltbereich (5) und/oder im Übergangsbereich (4), in dem Temperaturen bis ca. 300° C erreicht werden, die unterseitige Schicht (6) aus organischen Farben, wie Farblacke, Farben auf Basis organisch modifizierter Gläser und/oder Farben, die aus einer organischen, vorzugsweise polymeren Bindematrix oder Matrix auf Sol-Gel-Basis bestehen und konventionelle, anorganische Pigmente, Lüster-, Metalleffekt-, Perlglanz-, oder Interferenz-Pigmente oder verschiedene Mischungen dieser Pigmente enthalten, besteht.

7. Kochfeld nach einem der Ansprüche 3 bis 6, **dadurch gekennzeichnet, daß** die unterseitige Schicht (6) in dem Heiß-, Übergangs- und Kaltbereich (2, 4, 5) jeweils aus einer Kombination der für den Bereich temperaturbeständigen Farben besteht.

8. Kochfeld nach einem der Ansprüche 1 bis 7, **dadurch gekennzeichnet, daß** die unterseitige Schicht (6) mehrlagig ausgebildet ist.

9. Kochfeld nach einem der Ansprüche 1 bis 8, **dadurch gekennzeichnet, daß** die unterseitige Schicht (6) mit einer Deckschicht (8) aus einer anderen Farbe hinterlegt ist.

10. Kochfeld nach einem der Ansprüche 1 bis 9. **dadurch gekennzeichnet, daß** die Markierung der Kochzonen (2) durch Aussparungen in der unterseitigen Schicht (6) oder durch unterschiedliche Farben/Farbkontraste in der Schicht gebildet sind.

11. Kochfeld nach einem der Ansprüche 1 bis 10. **dadurch gekennzeichnet, daß** in der unterseitigen Schicht Displayfenster, insbesondere zur Restwärmeanzeige, für farbige LEDs oder LCDs, ausgebildet sind.

12. Kochfeld nach einem der Ansprüche 1 bis 11, **dadurch gekennzeichnet, daß** im Kaltbereich (5) der Glas- oder Glaskeramikplatte (1) eine Folie, vorzugsweise eine Aluminiumfolie (7) oder eine Edelstahl- oder eine entsprechend temperaturbeständige Kunststofffolie, wie z.B. eine Polyesterfolie oder Melaminharzfolie mit hochtransparenten Klebern auflaminiert ist und lediglich in den Heißbereichen (2) eine Farbschicht (6) aus den entsprechenden temperaturbeständigen Farben aufgebracht ist.

13. Kochfeld nach Anspruch 12, **dadurch gekennzeichnet, daß** auf der Folie Dekore aufgedruckt sind.

## Claims

1. Cook top comprising a transparent, untinted glass ceramic plate (1) or special pre-stressed glass plate as cooking surface, which has cooking zones (2) heated by radiant heating elements (3), on which extensive, coloured decorations are applied and whose underside carries a continuous IR-permeable layer (6), **characterized in that** the underside layer is embodied as a colour-imparting decoration (6) and the upper side of the glass ceramic plate or glass plate (1) is free of any decoration.

2. Cook top according to Claim 1, **characterized in that** the underside layer (6)
- is composed in the region of the cooking zones (2) (hot area) of a material which is heat resistant at temperatures greater than approximately 350°C, typically greater than 500°C, and
- is composed in the region of the cooking surface outside the cooking zones (2) (cold area) of material which is heat resistant at temperatures up to approximately 350°C.

3. Cook top according to Claim 1 or 2, **characterized in that** the underside layer (6) is built up at least in the hot area from colours composed of organometallic solutions having complexed and/or colloidal metal and/or noble-metal fractions (lustre colours, noble-metal resinates) optionally comprising pigments or pigment mixtures.

4. Cook top according to Claim 1 or 2, **characterized in that** the underside layer (6) is composed at least in the hot area of sol-gel layers optionally comprising pigments or pigment mixtures.

5. Cook top according to one of Claims 2 to 4, **characterized in that** in the cold area (5) and/or in the transition area (4), in which temperatures up to approximately 350°C are reached, the underside layer (6) is composed of lustre colours, with or without pigmentation, or of other organometallic colours, especially noble-metal resinates, anticorrosive colours, with or without pigmentation, or of sol-gel layers, with or without pigmentation, which are heat resistant at least up to the said temperature.

6. Cook top according to one of Claims 2 to 4, **characterized in that** in the cold area (5) and/or in the transition area (4), in which temperatures up to approximately 300°C are reached, the underside layer (6) is composed of organic colours, such as colour lakes, colours based on organically modified glasses and/or colours which are composed of an organic, preferably polymer binder matrix or sol-gel-based matrix and comprise conventional, inorganic pigments, lustrous pigments, metal-effect pigments, pearl-gloss pigments or interference pigments, or various mixtures of these pigments.

7. Cook top according to one of Claims 3 to 6, **characterized in that** the underside layer (6) in the hot, transition and cold area (2, 4, 5) is composed in each case of a combination of the colours that are heat-resistant for that area.

8. Cook top according to one of Claims 1 to 7, **characterized in that** the underside layer (6) is of multi-ply design.

9. Cook top according to one of Claims 1 to 8, **characterized in that** the underside layer (6) is backed by a cover layer (8) having a different colour.

10. Cook top according to one of Claims 1 to 9, **characterized in that** the marking of the cooking zones (2) is formed by gaps in the underside layer (6) or by different colours/colour contrasts in the layer.

11. Cook top according to one of Claims 1 to 10, **characterized in that** in the underside layer there are display windows, especially for residual heat indication, for coloured LEDs or LCDs.

12. Cook top according to one of Claims 1 to 11, **characterized in that** in the cold area (5) of the glass plate or glass ceramic plate (1) a foil, preferably an aluminium foil (7) or a noble steel foil or correspondingly heat-resistant polymeric film, such as a polyester film or melamine resin film, is laminated on with highly transparent glues and only in the hot areas (2) is a colour layer (6) applied comprising the corresponding heat-resistant colours.

13. Cook top according to Claim 12, **characterized in that** the foil has printed decorations thereon.

## Revendications

1. Plaque de cuisson avec une plaque vitrocéramique (1) transparente non teintée ou une plaque en verre spécial précontraint comme surface de cuisson comportant des zones de cuisson (2) chauffées par des éléments chauffants radiants (3) sur lesquelles des décors colorés à grande surface sont appliqués et dont la face inférieure porte en continu une couche transparente aux IR (6), **caractérisée en ce que** la couche sur la face inférieure (6) est simultanément conçue en tant que décor chromophore et **en ce que** la face supérieure de la plaque en vitrocéramique ou en verre (1) n'est pas décorée.

2. Plaque de cuisson selon la revendication 1, **caractérisée en ce que** la couche sur la face inférieure (6)
- dans la région des zones de cuisson (2) (région chaude) est en un matériau résistant à des températures supérieures à environ 350 °C, typiquement supérieures à 500°C et
- dans la région de la surface de cuisson hors des zones de cuisson (2) (région froide) est en un matériau résistant à des températures inférieures à environ 350°C.

3. Plaque de cuisson selon la revendication 1 ou 2, **caractérisée en ce que** la couche sur la face inférieure (6) est conçue au moins dans la région chaude en couleurs constituées de solutions organométalliques avec des parts de métaux et/ou de métaux précieux complexés et/ou colloïdaux (couleurs de lustre, résinates de métaux précieux), qui en option contiennent des pigments ou des mélanges de pigments.

4. Plaque de cuisson selon la revendication 1 ou 2, **caractérisée en ce qu'**au moins dans la région chaude, la couche sur la face inférieure (6) est constituée de couches sol-gel, qui en option contiennent des pigments ou des mélanges de pigments.

5. Plaque de cuisson selon l'une quelconque des revendications 2 à 4, **caractérisée en ce que** dans la région froide (5) et/ou dans la région de transition (4), dans laquelle des températures jusqu'à environ 350°C sont atteintes, la couche sur la face inférieure (6) est constituée de couleurs de lustre, le cas échéant pigmentées ou d'autres colorants organométalliques, notamment de résinates de métaux précieux, de colorants anticorrosion, le cas échéant pigmentés ou de couches sol-gel, le cas échéant pigmentées, qui sont résistants jusqu'à au moins cette température.

6. Plaque de cuisson selon l'une quelconque des revendications 2 à 4, **caractérisée en ce que** dans la région froide (5) et/ou dans la région de transition (4) dans laquelle des températures jusqu'à environ 300°C sont atteintes, la couche sur la face inférieure (6) est constituée de colorants organiques, comme des laques colorées, des colorants sur base de verres et/ou de colorants organiquement modifiés qui sont constitués d'une matrice de liaison organique, de préférence polymère ou d'une matrice sur base sol-gel et qui contiennent des pigments inorganiques usuels, des pigments de lustre, des pigments à effets métalliques, des pigments à lustre perlaire ou des pigments interférentiels ou différents mélanges de ces pigments.

7. Plaque de cuisson selon l'une quelconque des revendications 3 à 6, **caractérisée en ce que** dans la région chauffante, dans la région de transition et dans la région froide (2, 4, 5), la couche sur la face inférieure (6) est respectivement constituée d'une combinaison des couleurs résistant aux températures de ladite région.

8. Plaque de cuisson selon l'une quelconque des revendications 1 à 7, **caractérisée en ce que** la couche sur la face inférieure (6) est conçue en multicouches.

9. Plaque de cuisson selon l'une quelconque des revendications 1 à 8, **caractérisée en ce que** la couche sur la face inférieure (6) est doublée d'une couche de couverture (8) en une autre couleur.

10. Plaque de cuisson selon l'une quelconque des revendications 1 à 9, **caractérisée en ce que** le marquage des zones de cuisson (2) est formé par des échancrures dans la couche sur la face inférieure (6) ou par différentes couleurs/différents contrastes de couleurs dans la couche.

11. Plaque de cuisson selon l'une quelconque des revendications 1 à 10, **caractérisée en ce que** des fenêtres d'écran sont conçues dans la couche sur la face inférieure, notamment pour l'affichage de la chaleur résiduelle, pour des DEL ou des LCD colorés.

12. Plaque de cuisson selon l'une quelconque des revendications 1 à 11, **caractérisée en ce que** dans la région froide (5) de la plaque en verre ou en vitrocéramique (1) un film, de préférence un film en aluminium (7) ou un film en acier fin ou un film en matière plastique résistant à chaud, comme par exemple un film en polyester ou un film en résine de mélamine est appliqué par laminage avec des colles extrêmement diaphanes et **en ce que** seulement dans les régions chaudes (2), une couche de couleur (6) constituée des couleurs correspondantes résistant à chaud est appliquée.

13. Plaque de cuisson selon la revendication 12, **caractérisée en ce que** des décors sont apposés sur le film.
